(19) Europäisches Patentamt
European Patent Office
Office européen des brevets

(11) Veröffentlichungsnummer: **0 212 478**
**B1**

(12) # EUROPÄISCHE PATENTSCHRIFT

(45) Veröffentlichungstag der Patentschrift: **31.01.90**

(51) Int. Cl.[4]: **C 08 L 81/02**, C 08 K 5/10 // (C08L81/02, 67:00)

(21) Anmeldenummer: **86110948.6**

(22) Anmeldetag: **08.08.86**

(54) **Schnellkristallisierende Polyphenylensulfidmassen.**

(30) Priorität: **21.08.85 DE 3529838**

(43) Veröffentlichungstag der Anmeldung: **04.03.87 Patentblatt 87/10**

(45) Bekanntmachung des Hinweises auf die Patenterteilung: **31.01.90 Patentblatt 90/5**

(84) Benannte Vertragsstaaten: **BE DE FR GB IT**

(56) Entgegenhaltungen:
**EP-A- 0 044 184**
**WO-A-82/00152**

**PATENTS ABSTRACTS OF JAPAN, Band 9. Nr. 59 (C-270)[1782], 15. März 1985; & JP-A-59 196 364 (ASAHI KASEI KOGYO K.K.) 07-11-1984**

**Die Akte enthält technische Angaben, die nach dem Eingang der Anmeldung eingereicht wurden und die nicht in dieser Patentschrift enthalten sind.**

(73) Patentinhaber: **BAYER AG, D-5090 Leverkusen 1 Bayerwerk (DE)**

(72) Erfinder: **Bier, Peter, Dr., Bodelschwinghstrasse 18, D-4150 Krefeld (DE)**
Erfinder: **Reinking, Klaus, Dr., Robert-Stolz-Strasse 16b, D-5632 Wermelskirchen 1 (DE)**
Erfinder: **Bottenbruch, Ludwig, Dr., Woehler-strasse 5, D-4150 Krefeld (DE)**
Erfinder: **Tresper, Erhard, Dr., Dahlerdyk 154, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 212 478 B1

**Beschreibung**

Die Erfindung betrifft hochkristalline, schnellkristallisierende, thermoplastische Massen aus Polyphenylensulfiden und Veresterungsprodukten.

Polyphenylensulfide können als Rohstoffe für die Herstellung von Fasern, Folien und Formkörpern verwendet werden. Aufgrund ihrer teilkristallinen Struktur besitzen sie hervorragende Eigenschaften, z.B. hohe Verschleißfestigkeit, günstiges Zeitstandverhalten und hohe Maßgenauigkeit. Sie sind daher für die Herstellung mechanisch und thermisch stark beanspruchter Teile gut geeignet.

Eine zusätzliche Verbesserung der mechanischen Eigenschaften lässt sich durch Einarbeitung von Verstärkungsmaterialien, z.B. Glasfasern erzielen.

Die Herstellung von Formkörpern aus Polyphenylensulfid durch Spritzguß ist jedoch erschwert, da hohe Formtemperaturen (> 130°C) und relativ lange Preßzeiten notwendig sind. Werkzeugtemperaturen > 130°C und mehr kann bei den meisten Spritzgußverarbeitern nicht praktiziert werden, da die Werkzeuge im Normalfall für eine Temperatur um 100°C (Heizmittel Wasser) ausgelegt sind. Werkzeugeinrichtungen, die mit anderen Heizmitteln, z.B. Öl betrieben werden und Temperaturen > 110°C erzielen, sind im allgemeinen selten und ihr Gebrauch ist unbequem. Sehr häufig werden damit in der Praxis die gewünschten Temperaturen nicht erzielt, und die Temperaturverteilung ist ungleichmäßig. Wegen dieser ist es wirtschaftlich unattraktiv solche hohe Werkzeugtemperaturen im Spritzgußbereich anzuwenden.

Weiterhin ist es wünschenswert hohe Kristallinität möglichst rasch zu erreichen um ein optimales Eigenschaftsniveau zu erhalten. Hohe Kristallinität gewährleistet Härte, Dimensionsstabilität und Formstabilität, auch bei höheren Temperaturen. Außerdem hängt von der Formstandzeit die Dauer des Spritzzyklus ab, welche die Wirtschaftlichkeit mitbestimmt.

Diese Zyklen sind selbst bei den hohen Werkzeugtemperaturen für die Verarbeitung des Polyphenylensulfids relativ lang und erschweren das Vordringen von Polyphenylensulfid bei der Herstellung von Spritzgußformkörper.

Aus der EP-A 44 184 ist bekannt, vollaromatische Polyester mit Polyphenylensulfid abzumischen, um damit bestimmte verbesserte Eigenschaften, wie bessere Verarbeitbarkeit in der Schmelze, zu erreichen.

Es wurde nun gefunden, daß Polyphenylensulfide dann höhere Kristallinität besitzen und schneller kristallisieren wenn sie 0,5-30 Gew.-%, bezogen auf Polyphenylensulfid oligomere Carbonsäureester enthalten. Dies ermöglicht es, den für die hohe Formstabilität erforderlichen Kristallinitätsgrad schneller zu erreichen und damit die Polyphenylensulfidmassen mit stark verkürzten Spritzzyklen zu verarbeiten.

Ein weiterer Vorteil der erfindungsgemäßen Polyphenylensulfidmassen besteht in der Absenkung der Formtemperatur, ohne daß das gute Kristallisationsverhalten beeinträchtigt wird. Die Spritzgußmasse kühlt schneller ab, wodurch die Formstandzeit weiter abgekürzt wird.

Gegenstand der Erfindung sind hochkristalline, schnell kristallisierende thermoplastische Massen, bestehend aus:

a) 70-99,5 vorzugsweise 90-98,5, besonders bevorzugt 93-97 Gew.-% eines Polyphenylensulfids mit einer Schmelzviskosität von mindestens 5 Pas (gemessen bei 306°C und einer Schubspannung von $10^2$ Pa) und

b) 0,5-30 Gew.-% bezogen auf a) und b) eines oligomeren Esters mit einem unteren Polymerisationsgrad von 2 und einem maximalen Molekulargewicht, ausgedrückt als Zahlenmittel von 6000 und der im wesentlichen folgende Struktureinheiten der Formel (I) oder (II) besitzt bzw. Kombinationen daraus

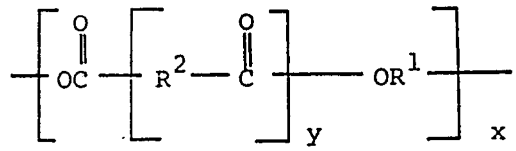
(I),

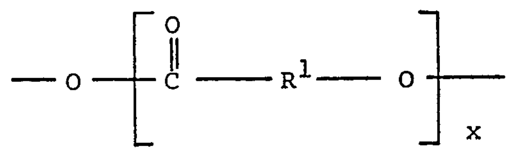
(II),

in denen unabhängig voneinander

$R^1$ für einen linearen oder verzweigten aliphatischen, cycloaliphatischen oder araliphatischen zweiwertigen Rest mit 2 bis 20 C-Atomen, vorzugsweise 2 bis 10 C-Atomen steht,

$R^2$ für einen linearen oder verzweigten aliphatischen, cycloaliphatischen, araliphatischen oder aromatischen zweiwertigen Rest mit 2 bis 20, vorzugsweise 3 bis 10 C-Atomen steht,

x für eine Zahl von 2 bis 60 steht, so daß das Oligomere ein Molekulargewichtszahlenmittel von 6000 oder weniger besitzt,

y für die Zahl 0 oder 1 steht, steht y für die Zahl 0, stellt das Oligomere ein aliphatisches Polycarbonat als einen speziellen Typ eines Polyesters dar.

Es können auch Mischungen der verschiedenen Verbindungen, die unter die Formeln (I) und (II) fallen, verwendet werden.

Ein weiterer Gegenstand der Erfindung ist ein Verfahren zur Herstellung hochkristalliner, schnellkristallisierender thermoplastischer Massen, dadurch gekennzeichnet, daß man 70-99,5 vorzugsweise 90 bis 98,5, besonders bevorzugt 93-97 Gew.-% eines Polyphenylensulfids mit einer Schmelzviskosität von mindestens 5 Pas (306°C, T = $10^2$ Pa) vorzugsweise mindestens 50 Pas und 0,5-30, vorzugsweise 1,5-10, besonders bevorzugt 3-7 Gew.-% mit einem oligomeren Polyester mit einem unteren Polymerisationsgrad von 2 und einem maximalen Molekulargewicht, ausgedrückt als Zahlenmittel, von 6000 der Formel (I) oder (II) miteinander mischt, indem man den oligomeren Ester der Polyphenylensulfidschmelze hinzufügt und in der Schmelze homogenisiert.

Ein weiterer Gegenstand der Erfindung ist ein Verfahren zum Spritzgießen von Massen nach Anspruch 1, dadurch gekennzeichnet, daß man eine Mischung aus einem Polyphenylensulfid mit einer Schmelzviskosität von mindestens 5 Pas (gemessen bei 306°C und einer Schubspannung von $10^2$ Pa) und einem

oligomeren Ester mit einem unteren Polymerisationsgrad von 2 und einem maximalen Molekulargewicht, ausgedrückt als Zahlenmittel, von 6000 in Formen gießt, die eine Temperatur von nicht mehr als 120°C aufweisen, wobei die Menge an oligomerem Ester so gewählt ist, daß das spritzgegossene Polyphenylensulfidteil mindestens 70% der Kristallinität aufweist, die man beim Verspritzen eines Teils aus unmodifiziertem Polyphenylensulfid bei Werkzeugtemperaturen von mindestens 130°C erreicht.

Polyphenylensulfide lassen sich auf bekannte Weise aus Dihalogenaromaten und Alkalisulfiden in Lösung herstellen. Sie können Schmelzviskositäten von 5 bis $10^7$, vorzugsweise 50 bis $10^5$ Pa.s besitzen (siehe beispielsweise US-PS 2 513 188).

Beispiele für Dihalogenaromaten sind p-Dichlorbenzol, p-Dibrombenzol, 1-Chlor-4-brombenzol, 1,3-Dichlorbenzol, 1,3-Dibrombenzol und 1-Chlor--3-brombenzol. Sie sind allein oder im Gemisch miteinander verwendbar. Besonders bevorzugt sind 1,4-Dichlorbenzol und/oder 1,4-Dibrombenzol.

Weitere Dihalogenaromaten sind z.B. 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl-2,4-dichlorbenzol, 1-Phenyl--2,5-dibrombenzol, 1-p-Tolyl-2,5-dichlorbenzol, 1--p-Tolyl-2,5-dibrombenzol, 1-Hexyl-2,5-dichlorbenzol, 2,4-Dichlortoluol.

Sollen verzweigte Polyarylensulfide hergestellt werden, werden mindestens 0,05 Mol-% eines Tri- oder Tetrahalogenaromaten zusätzlich eingesetzt.

Damit die Polyphenylensulfide termoplastisch verarbeitbar bleiben, sollte der Anteil an Tri- oder Tetrahalogenaromaten nicht mehr als 7 Mol-% bezogen auf eingesetztes Dihalogenbenzol betragen.

Beispiele für Tri- bzw. Tetrahalogenaromaten sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlortriazin.

Alkalisulfide werden in üblichen Mengen und in üblicher Weise eingesetzt. Zum Beispiel sind Natrium- und Kaliumsulfid geeignet. Es können Alkylsulfide eingesetzt werden, die aus Hygrogensulfiden mit Alkalihydroxiden wie LiOH, NaOH und KOH regeneriert werden. In jesem Fall können Mischungen sowohl der Sulfide als auch der Hydroxide eingesetzt werden.

Generell kann jedes polare Lösungsmittel für die Reaktion eingesetzt werden, das eine ausreichende Löslichkeit der organischen und gegebenenfalls anorganischen Reaktanten unter den Reaktionsbedingungen gewährleistet. Bevorzugt werden N-Alkyllactame verwendet.

N-Alkyllactame sind solche von Aminosäuren mit 3 bis 11 C-Atomen, die gegebenenfalls Substituenten am Kohlenstoffgerüst tragen können, die unter Reaktionsbedingungen inert sind.

Beispielweise finden als N-Alkyllactame Verwendung:

N-Methylcaprolactam, N-ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2--pyrrolidon, N-Isopropyl-2-pyrrolidon, N-Isobutyl--2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2--piperidon, N-Isobutyl-2-piperidon, N-Methyl-6-methyl-2-piperidon, N-Methyl-3-ethyl-2-piperidon.

Es können Mischungen der vorstehenden Lösungsmittel gewählt werden.

Die Reaktion kann gegebenenfalls zusätzlich in Anwesenheit von üblichen Katalysatoren, z.B. Alkalicarboxylaten (DE-AS 2 453 749), Lithiumhalogeniden oder Alkalicarboxylaten (DE-OS 2 523 362), Lithiumchlorid oder Lithiumcarboxylat (DE-OS 2 623 363), Alkalicarbonaten in Kombination mit Alkalicarboxylaten (US-PS 4 038 259), Lithiumacetat (DE-OS 2 623 333), Trialkaliphosphaten (DE-OS 2 930 710), Trialkaliphosphonaten (DE-OS 2 930 797), Alkalifluoriden (DE-OS 3 019 732), Alkalisulfonaten (US-PS 4 038 260), Lithiumcarbonat und Lithiumborat (US-PS 4 030 518) durchgeführt werden.

Die oligomeren Polyester mit Struktureinheiten der Formeln I und II können durch Veresterung oder Umesterung von Dicarbonsäuren, ihren Anhydriden und/oder den entsprechenden Dialkylderivaten mit aliphatischen, cycloaliphatischen oder araliphatischen Alkoholen hergestellt werden.

Eine detaillierte Beschreibung der unterschiedlichen Herstellungsmethoden ist von H. Henecka et al in Houben-Weyl, Vol VIII, Seite 359-680 (1952); von E. Müller in Houben-Weyl (1963), 1 et seq.; Georg Thieme Verlag, Stuttgart 1963; und in V.V. Korshak und S.V. Vinogradova, «Polyesters», Pergamon Press, Oxford 1965, speziell auf den Seiten 34-63 aufgeführt.

Geeignete Polyester können auch durch Polymerisation von cyclischen Estern z.B. nach US-PS 2 914 556, 2 977 385, 3 892 821 hergestellt werden.

Bevorzugte oligomere Polyester mit Struktureinheiten der Formeln I und II sind solche, die von folgenden zweiwertigen Säuren und Alkoholen abstammen, z.B.

von Dicarbonsäuren wie Adipinsäure, Phthalsäure, Sebacinsäure, Glutarsäure usw., von Dialkoholen wie Butandiol-1,3; Butandiol-1,4; Propandiol-1,3; Propandiol-1,2; Ethylenglykol; Diethylenglykol; Triethylenglykol; Hexandiol-1,6; 2-Ethylhexandiol-1,3 usw.

Die oligomeren Polyester können auch einige Mono- und Tricarbonsäuren sowie auch einige mono- und mehr als zweiwertige Alkohole umfassen z.B. Monocarbonsäuren wie Essigsäure, α-Ethylhexansäure, Laurinsäure, Stearinsäure, Benzoesäure, Monoalkohole wie iso-Nonylalkohol, iso-Decylalkohol, 3,5,5-Trimethylhexanol, 2-Ethylhexanol, Stearylalkohol, Butylalkohol, Methanol, Benzylalkohol, Tricarbonsäuren wie Trimesinsäure, Trimellitsäure, Zitronensäure, höherwertige Alkohole wie Glycerin, Trimethylolpropan, Pentaerythrit usw.

Weiterhin können geeignete oligomere Polyester auch aus aliphatischen, OH-Gruppenhaltigen Carbonsäuren wie z.B. Rizinusöl hergestellt werden, die unter geeigneten Bedingungen mit sich selbst polymerisieren.

Die Polyphenylensulfidzusammensetzungen können zusätzlich Füll- und/oder Verstärkungsstoffe in Form von Pulvern, Fasern oder Matten enthalten. Beispiele dafür sind Metalle, wie Stahl, Kupfer, Aluminium, anorganische Materialien wie Kohlenstoff, Aramide. Bevorzugte Füllstoffe sind Quarz, Kaolin, Schäferkreide, Talk, bevorzugte Verstärkungsstoffe sind Glasfasern.

Weiterhin können die Massen gegebenenfalls anorganische oder organische Pigmente, Farbstoffe, Fließhilfsmittel, Entformungsmittel, UV-Absorber, Stabilisatoren enthalten.

Um die Flammfestigkeit der Produkte weiter zu erhöhen können sie zusätzlich flammhindernde Additive enthalten wie z.B. solche die Halogen, Phosphor, Phosphor-Stickstoff gegebenenfalls in Kombination mit Oxiden der Elemente der V Nebengruppe wie z.B. Antimonoxid enthalten.

Die Kristallisationsgeschwindigkeit der Polyphenylensulfidmassen kann durch Zusatz von anorganischen oder organischen Keimbildungsmitteln weiter erhöht werden.

Dies wird bei den Spritzgußmassen standardmäßig durchgeführt. Dazu werden 0,05 bis 5, vorzugsweise 0,1 bis 1 Gew.-% Nukleierungsmittel, vorzugsweise Mikrotalk zugesetzt.

Die erfindungsgemäßen Polyphenylensulfidmassen sind ausgezeichnete Ausgangsmaterialien für die Herstellung von Folien und Fasern, vorzugsweise für die Herstellung von Formkörpern aller Art durch Spritzguß.

*Beispiele*

Die erfindungsgemäßen Polyphenylensulfidmassen wurden durch Mischen und Homogenisieren der Basiskomponenten (siehe Tabelle 1) mit einem 30 mm Werner und Pfleiderer Doppelwellenextruder bei einer Schmelztemperatur von 310°C hergestellt. Die zu Granulat zerhackten Stränge wurden über Nacht getrocknet.

Am getrockneten Granulat wurde die isotherme Kristallisationsgeschwindigkeit mit Hilfe einer DSC-Apparatur bestimmt. Vorbehandlung der Proben: aufgeheizt bis 330°C, 1 min auf Temperatur gehalten und in flüssigem Stickstoff abgeschreckt. Die amorphen Proben wurden in der DSC-Apparatur bei 110°C isotherm auskristallisieren lassen, wobei die Änderung der Kristallisationswärme in Abhängigkeit der Zeit registriert wurde (exothermer Peak).

Als Maß für die Kristallisationsgeschwindigkeit ist die Zeit bis zum Erreichen des Maximums in Tabelle 1 als Halbwertszeit eingetragen.

Die in Tabelle 1 aufgeführten erfindungsgemäßen Proben 1-11 bestehen aus einem Polyphenylensulfid mit einer Schmelzviskosität von 50 Pas (gemessen bei 306°C und einer Schubspannung von 100 Pa), 5 Gew.-% eines oligomeren Carbonsäureesters und 1 Gew.-% Mikrotalk. Beispiel 12 ist eine entsprechende Polyphenylensulfidprobe ohne oligomeren Carbonsäureester zum Vergleich.

TABELLE 1

| Beispiel | oligomerer Carbonsäureester | $\overline{M}_n$ (g/mol) | Endgruppen | Menge Gew.-% | Isotherme (110°C) Kristallisationsgeschwindigkeit Halbwertzeit (S) |
|---|---|---|---|---|---|
| 1 | Polytriethylenglykolphthalat | 1600 | -i-Nonyl | 5 | 16 |
| 2 | Polyhexandiol-1,6-phthalat | 1800 | -i-decyl | 5 | 17 |
| 3 | Polyhexandiol-1,6-adipat | 1400 | 2-Ethylhexyl | 5 | 15 |
| 4 | Polyhexandiol-1,6-adipat | 2000 | -OH | 5 | 17 |
| 5 | Polybutandiol-1,3-adipat | 1300 | -OH | 5 | 15 |
| 6 | Polybutandiol-1,4-adipat | 1900 | -OH | 5 | 18 |
| 7 | Polypropandiol-1,2-adipat | 2000 | 2-Ethylhexyl | 5 | 18 |
| 8 | Polyethylenglykoladiphat/ phthalat (1/2) | 1000 | i-decyl | 5 | 18 |
| 9 | Polypropandiol-1,2-adipat/phthalat (3/1) | 2000 | OH | 5 | 18 |
| 10 | Polybutandiol-1,3/ hexandiol-1,6 (1/1) adipat | 2000 | OH | 5 | 18 |
| 11 | Polybutandiol-1,3/ butandiol-1,4 (1/1) adipat | 1900 | OH | 5 | 18 |
| 12 | — | — | — | — | 42 |

**Patentansprüche**

1. Hochkristalline, schnellkristallisierende thermoplastische Massen bestehend aus

a) 70-99,5 Gew.-% eines Polyphenylensulfids, mit einer Schmelzviskosität von mindestens 5 Pas (gemessen bei 306 °C und einer Schubspannung von $10^2$ Pa) und

b) 0,5-30 Gew.-% bezogen auf a) und b) eines oligomeren Esters mit einem unteren Polymerisationsgrad von 2 und einem maximalen Molekulargewicht, ausgedrückt als Zahlenmittel von 6000 und der folgende Struktureinheiten der Formel (I) oder (II) besitzt bzw. Kombinationen daraus

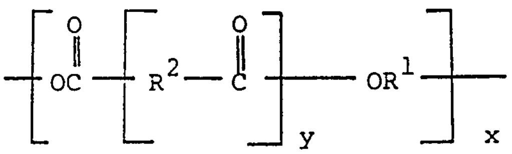 (I),

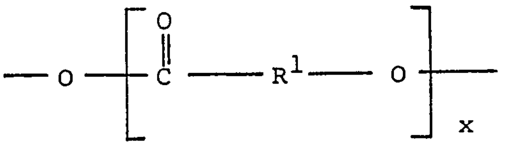 (II),

in denen unabhängig voneinander

$R^1$ für einen linearen oder verzweigten aliphatischen, cycloaliphatischen oder araliphatischen zweiwertigen Rest mit 2 bis 20 C-Atomen, vorzugsweise 2 bis 10 C-Atomen steht,

$R^2$ für einen linearen oder verzweigten aliphatischen, cycloaliphatischen, araliphatischen oder aromatischen zweiwertigen Rest mit 2 bis 20, vorzugsweise 3 bis 10 C-Atomen steht,

x für eine Zahl von 2 bis 60 steht, so daß das Oligomere ein Molekulargewichtszahlenmittel von 6000 oder weniger besitzt,

y für die Zahl 0 oder 1 steht, steht y für die Zahl 0, stellt das Oligomere ein aliphatisches Polycarbonat als einen speziellen Typ eines Polyesters dar.

2. Verfahren zur Herstellung von Massen nach Anspruch 1, dadurch gekennzeichnet, daß man 70-99,6 Gew.-%, eines Polyphenylensulfids mit einer Schmelzviskosität von mindestens 5 Pas (gemessen bei 306°C und einer Schubspannung von $10^2$ Pa) und 0,5-30 Gew.-% eines oligomeren Esters mit einem unteren Polymerisationsgrad von 2 und einem maximalen Molekulargewicht, ausgedrückt als Zahlenmittel von 6000 der Formeln (I) oder (II) miteinander mischt, indem man den oligomeren Ester der Polyphenylensulfidschmelze hinzufügt und in der Schmelze homogenisiert.

3. Verfahren zum Spritzgießen von Massen nach Anspruch 1, dadurch gekennzeichnet, daß man eine Mischung aus einem Polyphenylensulfid mit einer Schmelzviskosität von mindestens 5 Pas (gemessen bei 306°C und einer Schubspannung von $10^2$ Pa) und einem oligomeren Ester mit einem unteren Polymerisationsgrad von 2 und einem maximalen mindestens, ausgedrückt als Zahlenmittel von 6000 der Formeln (I) oder (II) in Formen gießt, die eine Temperatur von nicht mehr als 120 °C aufweisen, wobei die Menge an oligomerem Ester so gewählt ist, daß das spritzgegossene Polyphenylensulfidteil mindestens 70% der Kristallinität aufweist, die man beim Verspritzen eines Teils aus unmodifiziertem Polyphenylensulfid bei Werkzeugtemperaturen von mindestens 130 °C erreicht.

**Claims**

1. Highly crystalline, rapidly crystallizing thermoplastic compounds consisting of

a) 70 to 99.5% by weight of a polyphenylene sulfide having a melt viscosity of at least 5 Pas (as measured at 306°C under a shear stress of $10^2$ Pa) and

b) 0.5 to 30% by weight, based on a) and b), of an oligomeric ester which has a lower degree of polymerization of 2 and a maximum molecular weight, expressed as a number average, of 6000 and which contains the following structural units corresponding to formula (I) or (II) or combinations thereof

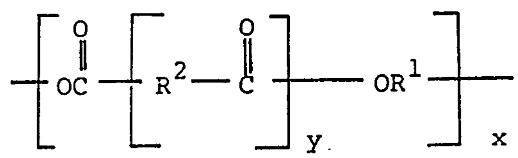 (I)

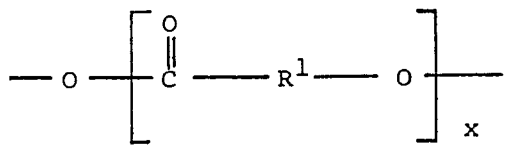 (II)

in which, independently of one another,

$R^1$ is a linear or branched, aliphatic, cycloaliphatic or araliphatic difunctional radical containing 2 to 20 C atoms and preferably 2 to 10 C atoms,

$R^2$ is a linear or branched, aliphatic, cycloaliphatic, araliphatic or aromatic difunctional radical containing 2 to 20 and preferably 3 to 10 C atoms,

x is a number of 2 to 60 so that the oligomer has a number average molecular weight of 6000 or less,

y is the number 0 or 1; where y = 0, the oligomer is an aliphatic polycarbonate as a special type of polyester.

2. A process for the production of the compounds claimed in claim 1, characterized in that 70 to 99.5% by weight of a polyphenylene sulfide having a melt viscosity of at least 5 Pas (as measured at 306°C under a shear stress of $10^2$ Pa) and 0.5 to 30% by weight of an oligomeric ester having a lower degree of polymerization of 2 and a maximum molecular weight, expressed as a number average, of 6000 corresponding to formula (I) or (II) are mixed together by adding the oligomeric ester to the polyphenylene sulfide melt and homogenizing the melt.

3. An injection-molding process for the compounds claimed in claim 1, characterized in that a mixture of a polyphenylene sulfide having a melt viscosity of at least 5 Pas (as measured at 306°C under a shear stress of $10^2$ Pa) and an oligomeric ester having a lower degree of polymerization of 2 and a maximum molecular weight, expressed as a number average, of 6000 corresponding to formula (I) or (II) is poured into molds which have a temperature of no

more than 120°C, the quantity of oligomeric ester being selected so that the injection-molded polyphenylene sulfide parts has at least 70% of the crystallinity reached in the extrusion of a part of unmodified polyphenylene sulfide at mold temperatures of at least 130°C.

**Revendications**

1. Masses thermoplastiques hautement cristallines à cristallisation rapide, composées de

a) 70 à 99,5% en poids d'un poly(sulfure de phénylène) dont la viscosity de la masse fondue est d'au moins 5 Pa.s (mesurée à 306°C et pour une tension de cisaillement de $10^2$ Pa), et

b) 0,5 à 30% en poids par rapport à a) et b) d'un ester oligomère avec un degré de polymérisation inférieur de 2 et un poids moléculaire maximal, exprimé par une moyenne en nombre, de 6000 et qui possède les unités structurelles des formules (I) ou (II) suivantes, ou leurs combinaisons:

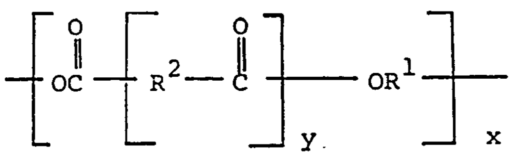

(I),

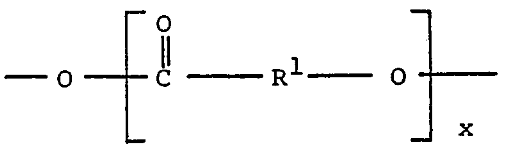

(II),

dans lesquelles $R^1$, $R^2$, x et y ont, indépendamment les uns des autres, les significations suivantes:

$R^1$ un reste aliphatique, cyclo-aliphatique ou araliphatique, bivalent, à chaîne linéaire ou ramifiée, avec 2 à 20 atomes de carbone, de préférence 2 à 10 atomes de carbone,

$R^2$ un reste aliphatique, cyclo-aliphatique, araliphatique ou aromatique bivalent, à chaîne linéaire ou ramifiée, avec 2 à 20, de préférence 3 à 10 atomes de carbone,

x un nombre de 2 à 60, de sorte que l'oligomère possède un poids moléculaire moyen en nombre de 6000 ou moins,

y le nombre 0 ou 1, si y est le nombre 0, l'oligomère représente un polycarbonate aliphatique comme type special de polyester.

2. Procédé pour la fabrication de masses selon la revendication 1, caractérisé en ce que l'on mélange 70 à 99,5% en poids d'un poly(sulfure de phénylène) présentant une viscosité de la masse fondue d'au moins 5 Pa.s (mesurée à 306°C et pour une tension de cisaillement de $10^2$ Pa) avec 0,5 à 30% en poids d'un ester oligomère ayant un degré inférieur de polymérisation de 2 et un poids moléculaire maximal exprimé par une moyenne en nombre de 6000 et répondant à la formule (I) ou (II), en ajoutant l'ester oligomère à la masse fondue de poly(sulfure de phénylène) et en l'y mélangeant de façon homogène.

3. Procédé pour le moulage par injection de masses selon la revendication 1, caractérisé en ce que l'on verse un mélange d'un poly(sulfure de phénylène) dont la viscosité de la masse fondue est d'au moins 5 Pa.s (mesurée à 306°C et pour une tension de cisaillement de $10^2$ Pa), et d'un ester oligomère ayant un degré de polymérisation inférieur de 2 et un poids moléculaire maximal, exprimé par une moyenne en nombre, de 6000, dans des moules dont la température n'est pas supérieure à 120°C, la quantité d'ester oligomère étant choisie telle que la part de poly(sulfure de phénylène) moulée par injection présente au moins 70% de la cristallinité que l'on atteint lors de l'injection d'une partie du poly(sulfure de phénylène) non modifié avec une température du moule de 130°C au moins.